# FASCICULE DE BREVET EUROPEEN

(11) **EP 0 753 256 B1**
(45) Date de publication et mention de la délivrance du brevet: **25.09.2002**
(21) Numéro de dépôt: 96401517.6
(22) Date de dépôt: 10.07.1996
(51) Int. Cl.: A01N 25/14, B01J 2/24

(54) **Nouvelle forme solide de stockage et de commercialisation pour compositions phytosanitaires et moyens pour sa préparation**
Neue feste Lagerungs- und Verkaufsform für Pflanzenschutzmittel und Mittel für ihre Herstellung
New solid storage and selling form for pesticidal compositions and means for its preparation

(30) Priorité: 13.07.1995 FR 9508569
(43) Date de publication de la demande: 15.01.1997
(73) Titulaire: CFPI NUFARM, 92233 Gennevilliers (FR)
(72) Inventeur: Schapira, Joseph, 75015 Paris (FR); Vincent, Jacques, 78750 Mareil Marly (FR); Guerin, Ange-Claude, 95130 Le Plessis Bouchard (FR); Fournials, Jean-Paul, 95000 Cergy Pontoise (FR)
(74) Mandataire: Koch, Gustave

(56) Documents cités:
- EP-A- 0 473 003
- EP-A- 0 893 058
- WO-A-96/23408
- WO-A-97/00608
- WO-A-97/05777
- WO-A-97/15186
- WO-A-97/24173
- GB-A- 2 218 634
- JP-B- 48 015 614
- US-A- 3 820 970
- US-A- 4 253 993
- "Kirk-Othmer Encyclopedia of Chemical Technology" , WILEY & SONS , 1989 XP002001028 édition 3, volume 21, pages 95-96 * page 95, alinéa 4 *
- CENTRAL PATENTS INDEX, BASIC ABSTRACTS JOURNAL Week 8351 Derwent Publications Ltd., London, GB; AN 83-848649 XP002001029 & SU-A-239 713 (YUKHTIN) , 11 Août 1969
- CENTRAL PATENTS INDEX, BASIC ABSTRACTS JOURNAL Week 7320, Derwent Publications Ltd., London, GB; AN 73-28772U, XP002001030 & JP-B-48 015 614 (TOKYO ORGANIC CHEMICALS IND.)

## Description

L'invention a pour objet une nouvelle forme solide de stockage et de commercialisation pour compositions phytosanitaires.

Elle vise également les moyens, c'est-à-dire un procédé et une installation pour sa préparation.

Elle vise enfin notamment son utilisation pour des compositions phytosanitaires à base de toutes substances actives peu ou pas solubles dans l'eau et solides à la température ambiante; ces substances actives sont choisies notamment parmi les herbicides répondant à ces caractéristiques et, plus spécialement, parmi ceux du groupe comprenant le bromoxynil et/ou l'ioxynil et leurs esters, en particulier l'octanoate ainsi que les dinitroanilines et en particulier la butraline, la pendiméthaline, la flumétraline et l'oryzalin, ces composés étant éventuellement en association avec d'autres herbicides.

On considère qu'une substance est solide à la température ambiante lorsque son point de fusion est supérieur à environ 20°C et plus généralement lorsque cette substance est à l'état solide dans les conditions de température régnant dans les laboratoires ou dans les locaux industriels.

Les formes solides de stockage et de commercialisation pour compositions phytosanitaires déjà connues sont des poudres mouillables ou solubles, ou des granulés que l'on délaie dans l'eau sous forme de bouillie en vue de leur application aux végétaux à traiter; elles présentent de nombreux inconvénients.

Ainsi, les poudres mouillables présentent, dans le cas de substances actives telles que le bromoxynil, outre les inconvénients usuels tels que la faible densité, le caractère poussiéreux ou la fluence médiocre, celui du caractère irritant de la matière active lors de la préparation et lors de toutes manipulations ultérieures.

Les inconvénients inhérents aux granulés se présentent au niveau de leur préparation.

En effet, les méthodes habituelles de granulation, à savoir l'agglomération par compactage, l'extrusion et la granulation sur plateau tournant, comportent une première étape consistant en une phase d'affinage à sec du produit et une phase d'agglomération; en raison de cet affinage à sec, on retrouve les inconvénients cités plus haut pour les poudres mouillables, en particulier leur effet irritant; par conséquent, leur préparation pose des problèmes d'hygiène et de sécurité industrielle.

Et même si, au lieu de l'affinage à sec, on procède à un broyage humide, en phase aqueuse, on retrouve les inconvénients inhérents aux poudres en raison du fait qu'il est alors nécessaire de prévoir une étape de séchage par pulvérisation, dans une tour ou en lit fluidisé, mettant en oeuvre des quantités importantes d'air ou de gaz neutre et nécessitant des opérations de recyclage, de tri granulométrique et surtout de récupération des particules les plus fines.

L'invention a donc pour but, surtout, de remédier aux inconvénients de l'art antérieur et de mettre à la disposition de l'utilisateur, d'une part, une nouvelle forme solide de stockage et de commercialisation non poussiéreuse pour composition phytosanitaire et, d'autre part, des moyens de préparation de cette nouvelle forme n'impliquant à aucun moment la manipulation de poudres de substance active.

Et la Société Demanderesse a le mérite d'avoir trouvé, à l'issue de recherches approfondies, que ce but était atteint dès lors que la forme de stockage et de commercialisation pour compositions phytosanitaires se présente sous la forme de fines paillettes dispersibles dans l'eau et constituées par une matière filmogène, soluble dans l'eau, friable et cassante à l'état sec, au sein de laquelle se trouvent dispersées notamment les particules de matière active.

En conséquence, la forme solide de stockage et de commercialisation conforme à l'invention pour compositions phytosanitaires à base de toutes substances actives peu ou pas solubles dans l'eau, solides à la température ambiante et notamment choisie parmi les herbicides répondant à ces propriétés, est caractérisée par le fait qu'elle se présente sous la forme de paillettes d'une épaisseur d'environ 50 à environ 400 µm, de préférence de 100 à 200 µm, dont la plus grande dimension est d'environ 2 à 20 mm, de préférence de 5 à 10 mm et qui sont à base d'une matière filmogène, soluble dans l'eau, friable et cassante à l'état sec, au sein de laquelle sont réparties notamment les particules de matière active dont la plus grande dimension est de 1 à 10 µm, de préférence de 2 à 5 µm.

Le procédé conforme à l'invention pour la préparation de la susdite forme solide de stockage et de commercialisation pour compositions phytosanitaires est caractérisé par le fait qu'une dispersion de particules de substance active dans une solution aqueuse d'une matière filmogène, soluble dans l'eau, friable et cassante à l'état sec, et comportant également les autres constituants de la composition phytosanitaire, est étalée sur une surface qui est anti-adhérente par rapport à ladite dispersion une fois séchée de façon à former une couche d'une épaisseur de 50 à 500 µm, de préférence de 100 à 300 µm, puis soumise à un séchage à une température de 35 à 150°C, ladite couche, une fois sèche, se détachant du support en formant des paillettes conformes à l'invention.

L'installation conforme à l'invention pour la préparation de la susdite forme solide de stockage et de commercialisation pour compositions phytosanitaires est caractérisée par le fait qu'elle comporte, à l'intérieur d'une enceinte, un tambour rotatif de séchage comportant une surface anti-adhérente vis-à-vis du produit devant y être déposé une fois amené à l'état sec, des moyens propres à appliquer en continu, dans une première zone non chauffée de l'enceinte, à la surface de ce tambour, une mince couche d'une dispersion de particules de substance active dans une solution aqueuse d'une matière filmogène, soluble dans l'eau, friable et cassante à l'état sec, et comportant également les autres constituants de la composition phytosanitaire, des moyens de chauffage de la surface de ce tambour situés dans une deuxième zone de l'enceinte et, dans une troisième zone, des moyens de récupération des paillettes formées après séchage à partir de la couche de dispersion aqueuse appliquée à la surface du tambour et des moyens assurant la rotation du tambour, de telle sorte que les parties de la surface du tambour auxquelles est appliquée la dispersion parcourent la partie chauffée de l'enceinte à une vitesse telle que la dispersion est séchée, se rétracte et se détache de la surface du tambour en formant des paillettes.

On a déjà décrit dans le document « Kirk-Othmer Encyclopedia of Chemical Technology », Wiley & Sons, 1989, des installations permettant de préparer sous forme de paillettes des compositions comportant des produits chimiques.

La surface de contact sur laquelle la composition à sécher est appliquée sous forme de film, est chauffée par l'intérieur et un racloir pour détacher le film est prévu.

Les documents « Central Patents index, Basis abstracts Journal, Week 8351 Derwent Publica-tions Ltd. AN 83-848649 & SU-A-239 713 et « Central Patents index, Basis abstracts Journal, Week 7320 Derwent Publications Ltd. AN 73-28772U & JP-A-73 015 614 décrivent des écailles comprenant des substances phytosanitaires mais dont la constitution fait qu'elles ne peuvent se déliter dans l'eau en donnant une dispersion de substance active.

Enfin, le document GB-A-2 218 634 décrit des granulés de produits solubles dans l'eau à base notamment de sels solubles de bromoxynil et d'ioxynil et d'un agent d'aide à la désintégration, ces granulés se dissolvant rapidement dans l'eau.

L'invention pourra être encore mieux comprise à l'aide du complément de description qui suit et des exemples dans lesquels sont décrits des modes de réalisation avantageux de l'invention ainsi que des dessins dans lesquels:
- la figure 1 montre une vue schématique d'une installation conforme à l'invention et
- les figures 2 et 3 montrent la configuration des paillettes conformes à l'invention.

Se proposant de préparer une forme solide de stockage et de commercialisation pour une compo-sition phytosanitaire dans laquelle la substance active est choisie parmi celles qui sont peu ou pas solubles dans l'eau et solides à la température ambiante, ces substances étant notamment choisies parmi les herbicides répondant à ces conditions et plus spécialement dans le groupe comprenant le bromoxynil et/ou l'ioxynil et leurs esters, notamment les octanoates, ainsi que les dinitroanilines et notamment la butraline, la pendiméthaline, la flumétraline et l'oryzalin, ces substances étant éventuellement en association avec d'autres herbicides, on s'y prend comme suit ou de manière équivalente.

Il convient de souligner qu'il est possible de prévoir, dans une composition phytosanitaire à base d'une ou plusieurs des substances actives susmentionnées, la présence d'une ou plusieurs substances actives ne répondant pas aux conditions susindiquées sous réserve que la quantité introduite soit suffisamment faible pour ne pas conférer au produit final selon l'invention une consistance collante ou cireuse.

Dans ce qui suit et à titre d'exemples, ce sont le bromoxynil et la butraline, éventuellement en association avec d'autres herbicides, qui ont été retenus.

Dans le cas du bromoxynil, on utilise du bromoxynil technique sous forme cristallisée grossière, non complètement séché, dont la taille des particules est supérieure à 200 µm et inférieure à 1 mm.

Dans le cas de la butraline, on utilise de la butraline technique sous forme sommairement broyée dont la taille des particules est inférieure à environ 500 microns.

Pour préparer une formulation à base de l'un ou de l'autre de ces produits, on peut procéder comme suit.

La formulation de la composition est effectuée en phase liquide en ajoutant à une dispersion aqueuse de la substance active, les ingrédients nécessaires au broyage, les agents mouillants et dispersants éventuellement antimousses et tout autre additif solide nécessitant un affinage.

On a avantageusement recours aux sulfates et/ou sulfonates d'alkylaryle, aux lignosulfonates, aux polynaphtylméthanesulfonates et aux polycarboxylates; les alkylphénols polyéthoxylés de haut poids moléculaire sont également utilisables sous réserve d'être choisis parmi ceux qui ne risquent pas de perturber le séchage ou de conférer au produit séché une consistance collante ou cireuse.

On broie le mélange, par exemple sur un broyeur classique à billes, notamment de verre ou d'oxyde de zirconium, jusqu'à une granulométrie permettant d'obtenir pour la bouillie aqueuse finale, qui sera préparée par l'utilisateur, des caractéristiques de tenue en suspension et d'efficacité biologique satisfaisantes; pour le bromoxynil, cette granulométrie correspond à une taille moyenne des particules de 1 à 10 µm, de préférence de l'ordre de 2 µm, aucune particule n'excédant de préférence 5 µm.

En partant de butraline technique, on procède de façon analogue et les dimensions finales des particules de butraline sont de préférence inférieures à environ 5 µm.

La concentration en matière sèche du mélange est choisie de façon à obtenir les performances optimales du broyeur; elle peut aller jusqu'à 75% en poids.

Lorsque la granulométrie souhaitée est atteinte, on procède à la préparation de la composition filmogène, soluble dans l'eau, proprement dite et devant conduire à une pellicule friable et cassante. On ajoute pour cela des agents liants, des agents délitants ainsi que des charges solubles permettant d'ajuster la dose de matières actives.

Les lignosulfonates et les polynaphtylméthanesulfonates conviennent parfaitement tant à titre d'agents liants qu'à titre d'agents délitants ou dispersants; ainsi, ils jouent à la fois le rôle d'agents liants à l'état sec et d'agents dispersants à l'état dissous; mais d'autres polymères solubles peuvent convenir.

Les charges solubles peuvent être des sels minéraux ou organiques de sodium, potassium ou ammonium, c'est-à-dire des chlorures, sulfates ou acétates mais aussi des produits organiques solubles dans l'eau tels que les sucres ou les polysaccharides.

Les produits cités plus haut en rapport avec le broyage conviennent parfaitement; toutefois, leur dose globale est ici plus élevée, de l'ordre de 5 à 50% et, de préférence, de 10 à 20% en poids par rapport à la composition.

On ajoute enfin, si nécessaire, des charges fines, des produits d'étalement et des adjuvants biologiques ne nécessitant pas de broyage.

On évite, comme précédemment, les produits qui pourraient gêner le séchage ou altérer les propriétés mécaniques des produits séchés.

On ajuste, par ailleurs, la viscosité de la dispersion par addition d'eau pour obtenir une fluidité permettant un étalement en couche fine; l'expérience montre que les résultats les plus intéressants sont obtenus pour des couches de quelques centaines de grammes par m², ce qui correspond avantageusement à l'épaisseur d'une couche de peinture.

Une telle couche peut être obtenue par tout moyen classique permettant l'étalement d'une peinture; on peut citer à cet égard l'application au pinceau, au rouleau ou encore par pulvérisation mécanique ou pneumatique.

Les propriétés de surface du support sont également importantes; d'un point de vue général, la surface du support doit être anti-adhérente.

Dans le cas général, il est possible d'utiliser un support dont la surface n'est pas anti-adhérente par elle-même; mais, dans ce cas, il convient d'y appliquer une couche de matériau anti-adhérent par exemple à base de silicone.

Une telle surface peut être régénérée en tant que de besoin par application d'une nouvelle quantité de produit anti-adhérent, par exemple à base de silicone.

Les meilleurs résultats sont obtenus sur des supports revêtus d'un enduit anti-adhérent téfloné, mais des surfaces lisses et vernissées conviennent également.

Au stade laboratoire, le séchage peut être effectué dans une étuve ventilée.

Au stade industriel, un tambour ou un tapis mobile peuvent être retenus, l'apport calorique étant réalisé par panneaux radiants ou soufflage d'air chaud.

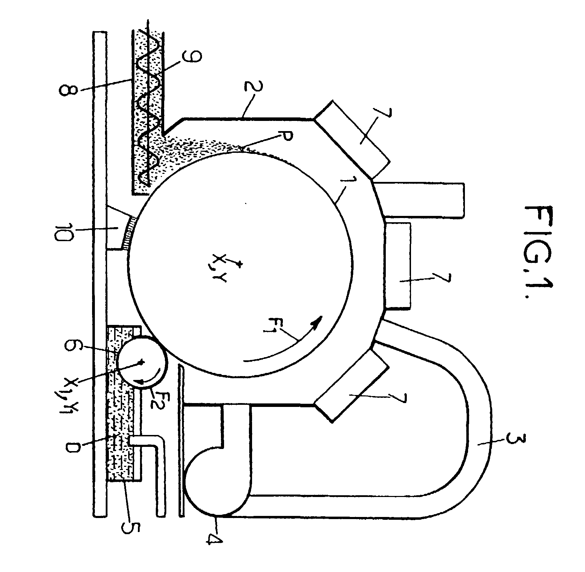

A cet égard, l'installation montrée à la figure 1 a donné de bons résultats.

Cette installation comporte un tambour de séchage 1 tournant autour d'un axe XY dans le sens de la flèche F₁; ce tambour, qui comporte une couche anti-adhérente à l'égard des produits qui y sont déposés une fois amenés à l'état sec, est disposé à l'intérieur d'une enceinte 2 ventilée à l'aide de moyens de soufflerie 3, 4.

La dispersion D de particules de substance active est stockée dans un bac 5 placé, dans une première zone, à l'intérieur de l'enceinte; l'application de la dispersion sur le tambour de séchage est réalisée à l'aide d'un rouleau d'enduction 6, tournant autour d'un axe X₁Y₁ dans le sens de la flèche F₂ et trempant dans la dispersion D.

Dans une deuxième zone, l'enceinte 2 comporte des panneaux radiants 7 pour le séchage de la couche de dispersion de matière active, ces panneaux étant disposés de telle sorte qu'ils assurent le chauffage du tambour avantageusement sur environ un tiers de son périmètre.

L'enceinte 2 comporte, dans une troisième zone, des moyens d'évacuation des paillettes sèches P qui se détachent de la surface du tambour par suite de la rétraction de la couche séchée; ces moyens peuvent comprendre une goulotte 8 dans laquelle le transport des paillettes P peut être assuré par une vis sans fin 9.

Il est enfin prévu des dispositifs de nettoyage du tambour 1, par exemple un tampon 10 appliqué par frottement doux contre la surface du tambour et situé en aval dans le sens de rotation selon F₁ par rapport à la goulotte 8.

Le fonctionnement de l'installation est comme suit.

Le tambour 1 est mis en rotation selon F₁ par des moyens d'entraînement non montrés.

A l'aide du rouleau d'enduction 6, on applique en continu une couche de dispersion à la surface du tambour; lors de la rotation de celui-ci dans le sens F₁, la couche de dispersion déposée à la surface du tambour parcourt la zone chauffée par les panneaux 7. Sous l'influence de ce chauffage, la couche de dispersion se craquèle par rétraction et se détache, formant les paillettes P qui sont évacuées par la goulotte 8.

Le matériau obtenu, constitué par les paillettes P, a l'aspect de paillettes fines; sous l'effet de traitements mécaniques modérés, les plus grandes particules se brisent sans donner de particules de finesse excessive.

La vitesse de délitage des paillettes au contact de l'eau est très favorable du fait de leur grande surface; elle ne dépend pas de la taille des paillettes mais seulement de leur épaisseur; ainsi, pour une épaisseur de couche donnée, obtenue par réglage de la quantité déposée, le produit ne demande donc pas de broyage ou de calibrage ultérieur, et aucun recyclage de paillettes de trop grandes ou de trop faibles dimensions n'est à prévoir.

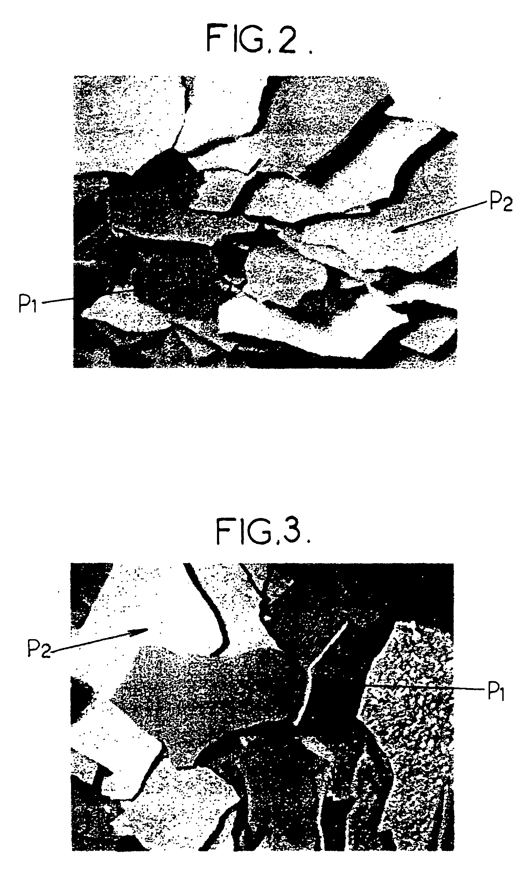

La configuration des paillettes conformes à l'invention résulte clairement des figures 2 et 3 qui sont des reproductions de photographies prises au microscope électronique; elles montrent respectivement deux ensembles de paillettes constitutives de la forme solide de stockage et de commercialisation conforme à l'invention.

On distingue des paillettes P₁ d'aspect sombre et des paillettes P₂ d'aspect clair suivant que la face visible est celle qui adhère au support au moment de la fabrication ou non.

De plus, les figures 2 et 3 montrent l'absence des particules poussiéreuses dans la forme de stockage et de commercialisation conforme à l'invention.

Dans les exemples qui suivent:
- le bromoxynil, à savoir le 3,5-dibromo-hydroxybenzonitrile, est celui produit par la C F P I; il est référencé CAS ("Chemical Abstract Service) 1689-84-5,
- la butraline utilisée est une butraline technique fabriquée par la C F P I et dont le point de fusion est de 59°C; elle est référencée CAS 33629-47-9,
- les produits désignés respectivement par les marques GALORYL MT 800 d'une part, GALORYL DT 201 et GALORYL DT 505 d'autre part, sont des agents mouillants pour le premier et des agents dispersants dorés de propriétés liantes au moment du séchage pour les seconds; le GALORYL MT 800 est à base de sel de sodium d'acide dibutylnaphtalène sulfonique, le GALORYL DT 201 est à base de sel de sodium d'un polymère d'acide hydroxynaphtalène sulfonique et de formaldéhyde et méthylphénol et le GALORYL DT 505 est à base de sel de sodium d'un condensat d'acide alkylnaphtalène sulfonique et de formaldéhyde ; ces produits sont fabriqués et commercialisés par la C F P I,
- le produit désigné par la marque MORWETT EFW est un agent mouillant à base de sel de sodium d'acide alkylnaphtalène sulfonique et de sulfate d'alkylcarboxylate, commercialisé par la Société Witco,
- le produit désigné par la marque TIXOSIL 38 est une silice précipitée, plus précisément une silice amorphe d'origine synthétique, de composition chimique : 10SᵢO₂, 1H₂O commercialisée par Rhône-Poulenc,
- le lignosulfonate de sodium qui est un produit soluble à effet dispersant et liant, est celui commercialisé par la Société Boregaard,
- le produit désigné par le nom commun DIURON est la (dichloro-3,4-phényl)-3-diméthyl-1,1-urée technique contenant au minium 98% de matière active ; ce produit est commercialisé par Rhône- Poulenc; le DIURON est référencé CAS 330-54-1,
- le produit désigné par le nom commun TITUS est un herbicide de post-levée du mais contenant 25% du produit de nom commun de RIMSULFURON qui est à base de [(diméthoxy-4,6 pyrimidine-yl-2) aminocarbonyl] N-éthyl sulfonyl-3 pyridine sulfonamide-2 et qui est commercialisé par Du Pont de Nemours.

### EXEMPLE 1

On prépare une dispersion aqueuse de bromoxynil technique de la constitution suivante:
- bromoxynil technique à 90% de matière active et à 7,5% d'humidité 1500 g
- GALORYL® MT 800 2,5 g
- GALORYL® DT 505 7,5 g
- eau de ville 990 g

Cette dispersion est réalisée sur un homogénéiseur de laboratoire de marque SILVERSON en incorporant progressivement la poudre de bromoxynil dans la solution des deux agents tensio-actifs. Elle est ensuite affinée sur un broyeur à billes de marque DYNO-MILL jusqu'à ce que l'observation au microscope ne révèle plus la présence de particules de dimensions supérieures à 5 microns.

On prélève 800 g de cette dispersion et on y ajoute 100 g de lignosulfonate de sodium.

La dispersion aqueuse résultante est pulvérisée au moyen d'un générateur d'aérosol de marque SIGMA SPRAY sur des plateaux d'aluminium dont les dimensions sont 28 cm x 38 cm et qui comportent un revêtement anti-adhérent de type ménager; ces plateaux sont préalablement chauffés à 50°C.

Après dépôt par pulvérisation progressive d'une couche homogène représentant 200 à 250 g par m² (soit 20 à 25 g par plateau), on procède au séchage en étuve ventilée à 75°C.

La couche se rétracte et se détache sans effort sous forme de petites paillettes; ces paillettes sont soumises à un traitement mécanique doux, tel que par exemple l'écrasement au moyen d'un bouchon de caoutchouc, ce qui permet de réduire leurs dimensions sans émission de poussières fines.

La forme de stockage et de commercialisation ainsi obtenue se délite aisément en moins d'une minute lorsqu'on la projette dans l'eau et l'examen sous microscope de la bouillie obtenue permet de constater que les particules solides de substance active sont parfaitement redispersées.

### EXEMPLE 2

On prépare une dispersion aqueuse de bromoxynil technique de forte concentration de la constitution suivante:
- bromoxynil technique à 90% de matière active et à 7,5% d'humidité 1500 g
- MORWETT® EFW 2,5 g
- GALORYL® DT 505 7,5 g
- eau de ville 500 g
en empâtant progressivement la substance active dans la solution aqueuse des agents tensio-actifs.

Le mélange consistant ainsi obtenu est broyé dans un dispositif à jarres de marque AUREC par agitation avec une charge broyante constituée de cylindres de céramique dure pendant une durée de 10 heures. A l'issue de ce broyage, on constate, par observation au microscope, que la taille moyenne des particules est de l'ordre de 2 microns.

On prépare par ailleurs un mélange contenant:
- TITUS à 25% de RIMSULFURON 3,9 g
- GALORYL® DT 201 9,1 g
- TIXOSIL® 38 1 g
- eau de ville 19 g

On ajoute la totalité de ce mélange (33 g) avec 67 g de la susdite dispersion de bromoxynil.

La dispersion aqueuse ainsi obtenue est pulvérisée au moyen d'un générateur d'aérosol de marque SIGMA SPRAY sur des plateaux d'aluminium dont les dimensions sont 28 cm x 38 cm et qui comportent un revêtement anti-adhérent de type ménager; ces plateaux sont préalablement chauffés à 50°C.

Après dépôt par pulvérisation progressive d'une couche homogène représentant 200 à 250 g par m² (soit 20 à 25 g par plateau), on procède au séchage en étuve ventilée à 60°C.

La couche se rétracte et se détache sans effort en formant de petites paillettes qui sont soumises à un traitement mécanique doux, tel que l'écrasement au moyen d'un bouchon de caoutchouc, ce qui permet de réduire leurs dimensions sans émission de poussières fines.

La forme de stockage et de commercialisation ainsi obtenue se délite aisément en moins d'une minute lorsqu'on la projette dans l'eau et l'examen sous microscope de la bouillie obtenue permet de constater que les particules solides de substance active sont parfaitement redispersées.

### EXEMPLE 3

On prépare une dispersion aqueuse de DIURON présentant la constitution suivante:
- DIURON technique à 98% de matière active 622,2 g
- GALORYL® DT 505 50 g
- GALORYL® MT 800 10 g
- eau de ville 317,8 g

On dissout les agents tensio-actifs dans l'eau et on ajoute progressivement la poudre de DIURON. L'opération est effectuée au moyen d'un homogénéiseur de laboratoire de marque SILVERSON.

On procède ensuite à une opération de broyage d'une durée d'une heure sur un broyeur à billes vertical de marque SUSSMEYER. L'examen au microscope de la dispersion ainsi obtenue confirme que la taille moyenne des particules de substance active est de 2 microns.

Une partie de cette suspension est utilisée pour préparer une formulation pulvérisable dont la constitution est comme suit:
- dispersion de DIURON broyé 131,2 g
- GALORYL® DT 505 10,5 g
- eau de ville 30 g

La dispersion aqueuse ainsi obtenue est pulvérisée au moyen d'un générateur d'aérosol de marque SIGMA SPRAY sur des plateaux d'aluminium dont les dimensions sont 28 cm x 38 cm et qui comportent un revêtement anti-adhérent de type ménager; ces plateaux sont préalablement chauffés à 50°C.

Après dépôt par pulvérisation progressive d'une couche homogène représentant 200 à 250 g par m² (soit 20 à 25 g par plateau), on procède au séchage en étuve ventilée à 60°C.

La couche se rétracte et se détache sans effort sous la forme de petites paillettes que l'on soumet à un traitement mécanique doux, tel que l'écrasement au moyen d'un bouchon de caoutchouc, ce qui permet de réduire leurs dimensions sans émission de poussières fines.

La forme de stockage et de commercialisation ainsi obtenue se délite aisément en moins d'une minute lorsqu'on la projette dans l'eau et l'examen sous microscope de la bouillie obtenue permet de constater que les particules solides de substance active sont parfaitement redispersées.

Une autre partie de cette suspension est utilisée pour préparer une formulation plus concentrée dont la constitution est comme suit:
- dispersion de DIURON broyé 84,2 g
- GALORYL® DT 505 15,2 g

La crème obtenue est appliquée au moyen d'un rouleau de mousse alvéolaire sur un plateau d'aluminium recouvert d'un revêtement téfloné et le plateau est mis à sécher à l'étuve ventilée à 50°C pour une durée de 6 heures.

Après séchage, les paillettes formées sont récupérées à 1 'aide d'une lame de plastique souple; les paillettes sont ensuite refractionnées pour amener leur plus grande dimension à moins de 1 cm.

Le délitage de ces paillettes dans l'eau est total.

## Revendications

1. Forme solide de stockage et de commercialisation pour compositions phytosanitaires, à base de toutes substances actives peu ou pas solubles dans l'eau, solides à la température ambiante et notamment choisie parmi les herbicides répondant à ces propriétés, **caractérisée par le fait qu'**elle se présente sous la forme de paillettes d'une épaisseur d'environ 50 à environ 400 µm, de préférence de 100 à 200 µm, dont la plus grande dimension est d'environ 2 à 20 mm, de préférence de 5 à 10 mm et qui sont à base d'une matière filmogène, soluble dans l'eau, friable et cassante à l'état sec, au sein de laquelle sont réparties notamment les particules de matière active dont la plus grande dimension est de 1 à 10 µm, de préférence de 2 à 5 µm.

2. Forme solide de stockage et de commercialisation pour compositions phytosanitaires, à base de bromoxynil et/ou d'ioxynil et/ou de leurs esters, notamment l'octanoate, ces composés étant éventuellement en association avec d'autres herbicides, **caractérisée par le fait qu'**elle se présente sous la forme de paillettes d'une épaisseur d'environ 50 à environ 400 µm, de préférence de 100 à 200 µm, dont la plus grande dimension est d'environ 2 à 20 mm, de préférence de 5 à 10 mm et qui sont à base d'une matière filmogène, soluble dans l'eau, friable et cassante à l'état sec, au sein de laquelle sont réparties notamment les particules de matière active dont la plus grande dimension est de 1 à 10 µm, de préférence de 2 à 5 µm.

3. Forme solide de stockage et de commercialisation pour compositions phytosanitaires, à base de dinitroanilines, notamment la butraline, la pendiméthaline, la flumétraline et l'oryzalin, éventuellement en association avec d'autres herbicides, **caractérisée par le fait qu'**elle se présente sous la forme de paillettes d'une épaisseur d'environ 50 à environ 400 µm, de préférence de 100 à 200 µm, dont la plus grande dimension est d'environ 2 à 20 mm, de préférence de 5 à 10 mm et qui sont à base d'une matière filmogène, soluble dans l'eau, friable et cassante à l'état sec, au sein de laquelle sont réparties notamment les particules de matière active dont la plus grande dimension est de 1 à 10 µm, de préférence de 2 à 5 µm.

4. Procédé pour la préparation d'une forme solide de stockage et de commercialisation pour compositions phytosanitaires selon l'une des revendications 1 à 3, **caractérisé par le fait qu'**une dispersion de particules de substance active dans une solution aqueuse d'une matière filmogène, soluble dans l'eau, friable et cassante à sec, et comportant également les autres constituants de la composition phytosanitaire, est étalée sur une surface qui est anti-adhérente par rapport à ladite dispersion une fois séchée de façon à former une couche d'une épaisseur de 50 à 500 µm, de préférence de 100 à 300 µm, puis soumise à un séchage à une température de 35 à 150°C, ladite couche, une fois sèche, se détachant du support en formant des paillettes.

5. Installation pour la préparation d'une forme solide de stockage et de commercialisation pour compositions phytosanitaires selon l'une des revendications 1 à 3, **caractérisée par le fait qu'**elle comporte, à l'intérieur d'une enceinte (2), un tambour rotatif (1) de séchage comportant une surface anti-adhérente vis-à-vis du produit devant y être déposé une fois amené à l'état sec, des moyens (6) propres à appliquer en continu, dans une première zone non chauffée de l'enceinte (2), à la surface de ce tambour (1), une mince couche d'une dispersion (D) de particules de substance active dans une solution aqueuse d'une matière filmogène, soluble dans l'eau, friable et cassante à sec, et comportant également les autres constituants de la composition phytosanitaire, des moyens (7) de chauffage de la surface de ce tambour situés dans une deuxième zone de l'enceinte et, dans une troisième zone, des moyens (8, 9) de récupération des paillettes (P) formées après séchage à partir de la couche de dispersion aqueuse appliquée à la surface du tambour (1) et des moyens assurant la rotation du tambour, de telle sorte que les parties de la surface du tambour auxquelles est appliquée la dispersion parcourent la partie chauffée de l'enceinte à une vitesse telle que la dispersion est séchée, se rétracte et se détache de la surface du tambour en formant des paillettes (P).

## Patentansprüche

1. Feste Lagerungs- und Verkaufsform für Pflanzenschutzmittel, auf Basis dessen, daß alle aktiven Substanzen kaum oder nicht in Wasser löslich sind, bei Umgebungstemperatur fest sind und insbesondere ausgewählt sind aus Herbiziden, die diesen Eigenschaften entsprechen, **dadurch gekennzeichnet, daß** sie in Form von Pailletten in einer Dicke von etwa 50 bis etwa 400 µm, vorzugsweise von 100 bis 200 µm, vorliegen, deren größte Abmessung etwa 2 bis 20 mm, vorzugsweise von 5 bis 10 mm, beträgt und die auf einem filmbildenden, in Wasser löslichen, im trockenen Zustand bröckeligen und spröden Material basieren, in welchem insbesondere die aktiven Materialteilchen verteilt sind, deren größte Abmessung 1 bis 10 µm, vorzugsweise von 2 bis 5 µm, beträgt.

2. Feste Lagerungs- und Verkaufsform für Pflanzenschutzmittel, auf Basis von Bromoxynil und/oder Ioxynil und/oder deren Estern, insbesondere Octanoat, wobei sich diese Zusammensetzungen gegebenenfalls in Verbindung mit weiteren Herbiziden befinden, **dadurch gekennzeichnet, daß** sie in Form von Pailletten in einer Dicke von etwa 50 bis etwa 400 µm, vorzugsweise von 100 bis 200 µm, vorliegen, deren größte Abmessung etwa 2 bis 20 mm, vorzugsweise von 5 bis 10 mm, beträgt und die auf einem filmbildenden, in Wasser löslichen, in trockenem Zustand brökkeligen und spröden Material basieren, in welchem insbesondere die Teilchen des aktiven Materials verteilt sind, dessen größte Abmessung von 1 bis 10 µm, vorzugsweise von 2 bis 5 µm beträgt.

3. Feste Lagerungs- und Verkaufsform für Pflanzenschutzmittel, auf der Basis von Dinitroanillinen, insbesondere Butralin, Pendimethalin, Flumetralin und Oryzalin, gegebenenfalls in Verbindung mit weiteren Herbiziden, **dadurch gekennzeichnet, daß** sie in Form von Pailletten in einer Dicke von etwa 50 bis etwa 400 µm, vorzugsweise von 100 bis 200 µm, vorliegen, deren größte Abmessung etwa 2 bis 20 mm, vorzugsweise von 5 bis 10 mm, beträgt und die auf einem filmbildenden, in Wasser löslichen, in trockenem Zustand bröckeligen und spröden Material basieren, in welchem insbesondere die Teilchen des aktiven Materials verteilt sind, dessen größte Abmessung von 1 bis 10 µm, vorzugsweise von 2 bis 5 µm beträgt.

4. Verfahren zur Präparierung einer festen Lagerungs- und Verkaufsform für Pflanzenschutzmittel gemäß einem der Ansprüche 1 bis 3, **dadurch gekennzeichnet, daß** eine Dispersion von Teilchen einer aktiven Substanz in einer wäßrigen Lösung eines filmbildenden, in Wasser löslichen, in trockenem Zustand bröckeligen und spröden Materials und auch mit weiteren Bestandteilen des Pflanzenschutzmittels auf eine Oberfläche aufgetragen wird, die in Bezug auf die Dispersion, wenn diese getrocknet ist, antihaftend ist, um eine Schicht von einer Dicke von 50 bis 500 µm, vorzugsweise von 100 bis 200 µm, zu bilden, die dann einer Trocknung bei einer Temperatur von 35 bis 150°C ausgesetzt wird, wobei sich die Schicht, sobald sie getrocknet ist, von der Unterlage unter Bildung der Pailletten ablöst.

5. Anlage zur Präparierung einer festen Lagerungs- und Verkaufsform Pflanzenschutzmittel nach einem der Ansprüche 1 bis 3, **dadurch gekennzeichnet, daß** diese aufweist, im Inneren einer Einfassung (2) eine Drehtrommel (1) zur Trocknung, die eine Oberfläche aufweist, die gegenüber dem davor abgelagerten Produkt antihaftend ist, sobald dieses in den trockenen Zustand überführt ist, Mittel (6), die dazu geeignet sind, kontinuierlich in einer ersten, nicht erwärmten Zone der Einfassung (2) auf die Oberfläche der Trommel (1) eine dünne Schicht einer Dispersion (D) aus Teilchen einer aktiven Substanz in einer wäßrigen Lösung eines filmbildenden, in Wasser löslichen, in trockenem Zustand bröckeligen und spröden Materials und auch mit den weiteren Bestandteilen des Pflanzenschutzmittels aufzubringen, Mittel (7) zur Erwärmung der Oberfläche dieser Trommel, die in einer zweiten Zone der Einfassung liegen, und, in einer dritten Zone, Mittel (8, 9) zur Wiedergewinnung von Pailletten (P), die nach der Trocknung gebildet werden, ausgehend von der wäßrigen Dispersionsschicht, die auf der Oberfläche der Trommel (1) aufgebracht ist, und Mittel, welche die Drehung der Trommel sicher stellen, derart, daß die Teile der Oberfläche der Trommel, auf welchen die Dispersion aufgebracht ist, den erwärmten Teil der Einfassung mit einer Geschwindigkeit durchlaufen, derart, daß die Dispersion getrocknet wird, sich zusammenzieht und sich von der Oberfläche der Trommel unter Bildung der Pailletten (P) ablöst.

## Claims

1. Solid storage and marketing form for phytosanitary compositions, comprising any active substance which is weakly soluble in water or insoluble in water, solid at ambient temperature, in particular selected from herbicides presenting said features, **characterized in that** it is in the form of fine flakes whose thickness is from about 50 to about 400 µm, preferably from 100 to 200 µm, whose largest dimension is from about 2 to 20 mm, preferably from 5 to 10 mm and which contain a film-forming material which is water-soluble and brittle after drying, and throughout which are dispersed in particular the particles of active material whose largest dimension is from 1 to 10 µm, preferably from 2 to 5 µm.

2. Solid storage and marketing form for phytosanitary compositions comprising bromoxynil and/or ioxynil and/or their esters, in particular the octanoate, possibly in combination with other herbicides, **characterized in that** it is in the form of fine flakes whose thickness is from about 50 to about 400 µm, preferably from 100 to 200 µm, whose largest dimension is from about 2 to 20 mm, preferably from 5 to 10 mm and which contain a film-forming material which is water-soluble and brittle after drying, and throughout which are dispersed in particular the particles of active material whose largest dimension is from 1 to 10 µm, preferably from 2 to 5 µm.

3. Solid storage and marketing form for phytosanitary compositions comprising a dinitroaniline, in particular butraline, pendimethaline, flumetraline and oryzalin, optionally in combination with other herbicides, **characterized in that** it is in the form of fine flakes whose thickness is from about 50 to about 400 µm, preferably from 100 to 200 µm, whose largest dimension is from about 2 to 20 mm, preferably from 5 to 10 mm and which contain on a film-forming material which is water-soluble and brittle after drying, and throughout which are dispersed in particular the particles of active material whose largest dimension is from 1 to 10 µm, preferably from 2 to 5 µm.

4. Process for the preparation of a solid storage and marketing form for phytosanitary compositions according to any one of claims 1 to 3, wherein a dispersion of particles of the active substance in an aqueous solution of a film-forming material which is water-soluble and brittle in the dry state and which also comprises the other components of the phytosanitary composition, is spread over a anti-adherent surface with respect to the said dispersion once dried, in such a way as to form a layer whose thickness is from 50 to 500 µm, preferably from 100 to 300 µm, the said layer being then subjected to a drying at a temperature from 35 to 150°C, the said layer, once dry, shrinking and separating itself from the support thus forming fine flakes.

5. Installation for the preparation of a solid storage and marketing form for phytosanitary compositions according to any one of claims 1 to 3, comprising, inside an enclosed space or chamber (2), a rotating drying drum (1) comprising a surface which is anti-adherent with respect to the product intended to be spread thereon once dry, means (6) adapted to apply continuously, inside a first zone which is not heated, of the enclosed space (2), at the surface of the drum (1), a thin layer of a dispersion (D) of particles of active substance in an aqueous solution of a film-forming material which is brittle in the dry state, and which also comprises the other components of the phytosanitary composition, heating means (7) for the surface of the drum located inside a second zone of the enclosed space or chamber and inside a third zone means (8, 9) for recuperation of the thin flakes formed after drying from the layer of aqueous dispersion spread on the surface of the drum (1) and means which are adapted to rotate the drum in such a way that the parts of the surface of the drum on which is applied the abovesaid dispersion travel through the heated part or zone of the chamber at a speed such that the dispersion (D) is dried, shrinks and becomes detached from the surface of the drum, thus forming flakes (P).
